# EUROPÄISCHE PATENTSCHRIFT

(11) **EP 3 269 218 B1**
(45) Veröffentlichungstag und Bekanntmachung des Hinweises auf die Patenterteilung: **15.01.2020**
(21) Anmeldenummer: 17401070.2
(22) Anmeldetag: 05.07.2017
(51) Int. Cl.: A01C 5/06, A01B 23/06, A01B 15/16

(54) **LANDWIRTSCHAFTLICHE SÄMASCHINE MIT ABSTREIFELEMENT**
AGRICULTURAL SEEDING MACHINE WITH SCRAPING MEMBER
SEMOIR AGRICOLE COMPRENANT UN ÉLÉMENT RACLEUR

(30) Priorität: 11.07.2016 DE 102016112634
(43) Veröffentlichungstag der Anmeldung: 17.01.2018
(73) Patentinhaber: Amazonen-Werke H. Dreyer GmbH & Co. KG, 49205 Hasbergen (DE)
(72) Erfinder: Wilken, Martin, 26123 Oldenburg (DE); Hüer, Berthold, 49740 Haselünne (DE); Tanke, Christian, 01723 Kesselsdorf (DE)

(56) Entgegenhaltungen:
- EP-A1- 0 056 988
- EP-B1- 0 872 168
- WO-A1-2015/067226
- DE-U1-202007 015 632
- US-A- 4 206 817
- US-A- 5 060 586

## Beschreibung

Die Erfindung betrifft eine landwirtschaftliche Sämaschine gemäß des Oberbegriffes des Patentanspruches 1.

Eine derartige Sämaschine ist in der WO 2015/067226 A1, der EP 0 872 168 B1 oder der US 4 206 817 A beschrieben. Die Sämaschine weist mehrere als Doppelscheibenschare ausgeführte Säschare auf. Die Scharscheiben sind V-förmig zueinander angestellt. Zwischen den Scharscheiben eines Doppelscheibenschars ist im in Särichtung hinteren Bereich ein Abstreifelement angeordnet. Das Abstreifelement ist elastisch ausgeführt und lösbar, U-förmig mit einem Befestigungselement eingespannt. Die offenen Enden des derart eingespannten Abstreifelements sind entgegen der Särichtung ausgerichtet und legen sich an die Innenseite der Scheiben des Doppelscheibenschars an. Durch die Rotationsrichtung der Scharscheiben während des Säbetriebes der Sämaschine läuft der nach der Bodenbearbeitung verschmutze Bereich einer Scharscheibe gegen die offenen Enden des Abstreifelements. Dabei werden die anhaftenden Verschmutzungen von den Scharscheiben abgestreift.

Eine zufriedenstellende Reinigungswirkung der Scharscheiben bedingt einen geeigneten, gleichbleibenden Anpressdruck des Abstreifelements an die Scharscheibe. Dieser wird durch die Rückstellkraft des U-förmig vorgespannten Abstreifelements gewährleistet. Das Material des Abstreifelements muss eine ausreichende Festigkeit aufweisen, damit sich das Abstreifelement beispielsweise unter Last nicht von den Scharscheiben weg biegt und in der Folge eine nur unzureichende Reinigungswirkung erzielt. Dadurch kommt es in nachteiliger Weise zu einer starken Reibwirkung des Abstreifelements gegen die Scharscheiben, welche ein Bremsen der Rotationsbewegung der Scharscheiben bewirkt. Es ist ebenfalls nachteilig, dass die notwendige Festigkeit des Abstreifelements zwangsläufig die Elastizität des Abstreifelements verringert. Dadurch kann sich das Abstreifelement unter der Vorspannwirkung des zu seiner Aufnahme vorgesehenen Befestigungselements dauerhaft verformen. Dies senkt den Anpressdruck des Abstreifelements gegen die Scharscheiben und beeinträchtigt die Reinigungswirkung.

Der Erfindung liegt daher die Aufgabe zugrunde, die beschriebenen Nachteile abzustellen und ein Abstreifelement bereitzustellen, welches sowohl eine ausreichende Festigkeit als auch geeignete Elastizitätseigenschaften aufweist.

Zur Lösung dieser Aufgabe ist vorgesehen, dass das Abstreifelement ein nicht der Befestigung des Abstreifelements an dem Befestigungselement dienendes Lochmuster aufweist.

Durch ein geeignetes Lochmuster wird das unter Vorspannung stehende Material entlastet. So wird eine dauerhafte Verformung des unter Vorspannung stehenden Materials vermieden. Gleichzeitig erhält ein Material höherer Festigkeit durch das Lochmuster in den mit dem Lochmuster versehenen Bereichen besonders günstige Elastizitätseigenschaften.

Im Kontext der beschriebenen Erfindung stellt ein Loch einen Bereich des Abstreifelements dar, dessen Materialstärke geringer ist, als die seiner Umgebung. Dabei kann die Materialstärke auch wesentlich dünner als die der Umgebung sein, wobei ein tatsächlicher Materialdurchbruch bei einer Materialstärke von Null erreicht wird.

Erfindungsgemäß ist die Form, Größe und Verteilung der Löcher des Lochmusters des Abstreifelements geeignet, eine definierte Rückstellkraft des Abstreifelements zu bewirken. Damit die Reibung der offenen Enden des Abstreifelements nicht zu stark ist und ein Bremsen der Rotationsbewegung der Scharscheiben bewirkt, werden die Elastizitätseigenschaften des Abstreifelements über das Lochmuster derart beeinflusst, dass ein Bremsen nicht auftritt und dennoch eine optimale Reinigungswirkung erzielt wird.

Es ist denkbar, dass auf diese Weise die Abstreifelemente durch das geeignete Lochmuster beispielsweise an den Bodentyp angepasst werden können. So ist sichergestellt, dass an den Scharscheiben anhaftende, bodentypabhängige Verschmutzungen zuverlässig entfernt werden und optimale Elastizitätseigenschaften zu einer hohen Lebensdauer des Abstreifelements führen.

Ein besonderer Vorteil wird erreicht, indem die Form, Größe und Verteilung der Löcher des Lochmusters des Abstreifelements geeignet ist, eine gezielte Beeinflussung der Elastizitätseigenschaften des Abstreifelements zu bewirken. Die Form, Größe und Anordnung des Lochmusters bewirkt eine gezielte Entlastung des unter Vorspannung stehenden Materials. Auf diese Weise kann die dauerhafte Verformung des vorgespannten Abstreifelements vermieden werden. Zudem wirkt sich die Form, Größe und Anordnung des Lochmusters in analoger Weise auf die Rückstellkraft des Materials aus. Die Rückstellkraft des Materials bewirkt den Anpressdruck der offenen Enden des Abstreifelements gegen die Scharscheiben. Durch das Lochmuster wird in vorteilhafter Weise ein Material gezielt mit Elastizitätseigenschaften versehen, die eine gleichbleibende Rückstellkraft und einen für eine optimale Reinigungswirkung geeigneten Anpressdruck der offenen Enden des Abstreifelements gegen die Scharscheiben sicherstellen. Somit werden die Zuverlässigkeit und die Lebensdauer es Abstreifelements signifikant erhöht.

Es ist vorteilhaft, dass den offenen Enden des Abstreifelements jeweils zumindest ein Verschleißelement zugeordnet ist. Durch die Verschleißelemente hat das flexible Material des Abstreifelements keinen reibenden Kontakt zu den sich drehenden Scharscheiben. Dadurch tritt beim Abstreifelement kein Materialabrieb auf und seine Lebensdauer steigt erheblich. Zudem bestehen Verschleißelemente aus hartem, abriebfestem Material und/oder weisen scharfe Kanten auf, wodurch sie geeignet sind, auch fest angedrückte Verschmutzungen zuverlässig von den Scharscheiben abzustreifen.

Es ist zudem von Vorteil, dass das zumindest eine Verschleißelement als Plättchen ausgebildet ist. Sind die offenen Enden des Abstreifelements mit mehreren als Plättchen ausgebildeten Verschleißelementen versehen, ist dem offenen Ende des Abstreifelements eine verbesserte Anpassung und/oder Anlage an die Innenseite der Schareiben möglich. Bei nur einem größeren Plättchen besteht die Gefahr eines Verkantens und folglich einer unvollständigen Reinigungswirkung.

Es ist vorteilhaft, dass das zumindest eine Verschleißelement aus abriebfestem Material besteht. Das Verschleißelement ist Reibung an der Scharscheibe und/oder an den an der Scharscheibe haftenden Verschmutzungen ausgesetzt. Durch die Verwendung von abriebfesten Verschleißelementen wird die Lebensdauer des Abstreifelements erheblich erhöht.

Weitere Einzelheiten der Erfindung sind der Beispielsbeschreibung und den Zeichnungen zu entnehmen. Die Zeichnungen zeigen
- Fig.1: ein Doppelscheibenschar einer landwirtschaftlichen Sämaschine in perspektivischer Ansicht von schräg hinten,
- Fig.2: ein geöffnetes Doppelscheibenschar einer landwirtschaftlichen Sämaschine in perspektivischer Ansicht von schräg hinten,
- Fig.3: die Saatgutabgabevorrichtung mit Abstreifelement zwischen den Scheiben eines Doppelscheibenschars in perspektivischer Ansicht von schräg hinten,
- Fig.4: das Abstreifelement in perspektivischer Ansicht von schräg hinten und
- Fig.5: das Abstreifelement in einer Ansicht von hinten.

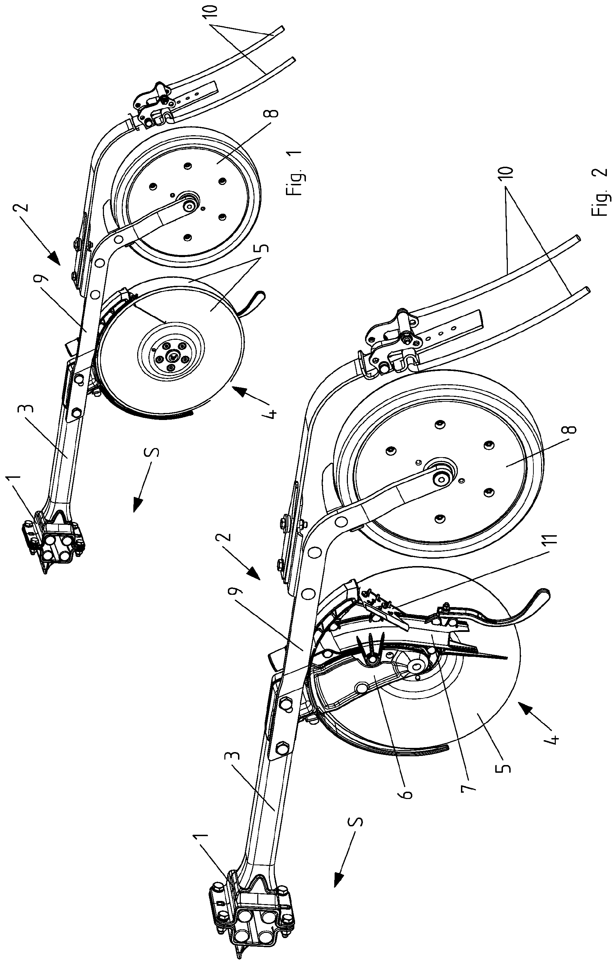

Eine landwirtschaftliche Sämaschine weist typischerweise einen quer zur Särichtung S ausgerichteten Rahmen auf. Mittels Befestigungselementen 1 sind an dem nicht dargestellten Rahmen mehrere Saatgutablagevorrichtungen 2 befestigt, wie sie Fig. 1 zeigt.

Eine Saatgutablagevorrichtung 2 weist einen in Särichtung S nach vorn ragenden Tragarm 3 auf, welcher mit dem Befestigungselement 1 verbunden ist. An dem Tragarm 3 ist ein Furchenöffnungselement 4 angeordnet, welches im Beispiel der Fig. 1 bis 3 als Doppelscheibenschar ausgeführt ist. Das Furchenöffnungselement 4 weist zwei V-förmig zueinander angestellte Scharscheiben 5 auf, welche geeignet sind, in den Erdboden einzuschneiden und eine Furche zur Ablage von Saatgut zu öffnen. Die Scharscheiben 5 sind an einem Halteelement 6 drehbar gelagert.

Das Saatgut wird mittels einer Saatgutabgabevorrichtung 7 in der Furche abgelegt. Die Saatgutabgabevorrichtung 7 ist im in Särichtung S hinteren Bereich der Scharscheiben 5 zentriert zwischen den Scharscheiben 5 oberhalb der Furche an dem Halteelement 6 befestigt. Dies zeigt die geöffnete Ansicht des Doppelscheibenschars in Fig. 2.

Eine dem Furchenöffnungselement 4 nachlaufende Andruckrolle 8 schließt die geöffnete Furche nach der Saatgutablage. Die Andruckrolle 8 ist über einen Haltearm 9 am Tragarm 3 befestigt. Die angedrückte Saatfurche wird anschließend mittels eines mit dem Haltearm 9 verbundenen Zustreichelements 10 mit Erde bedeckt.

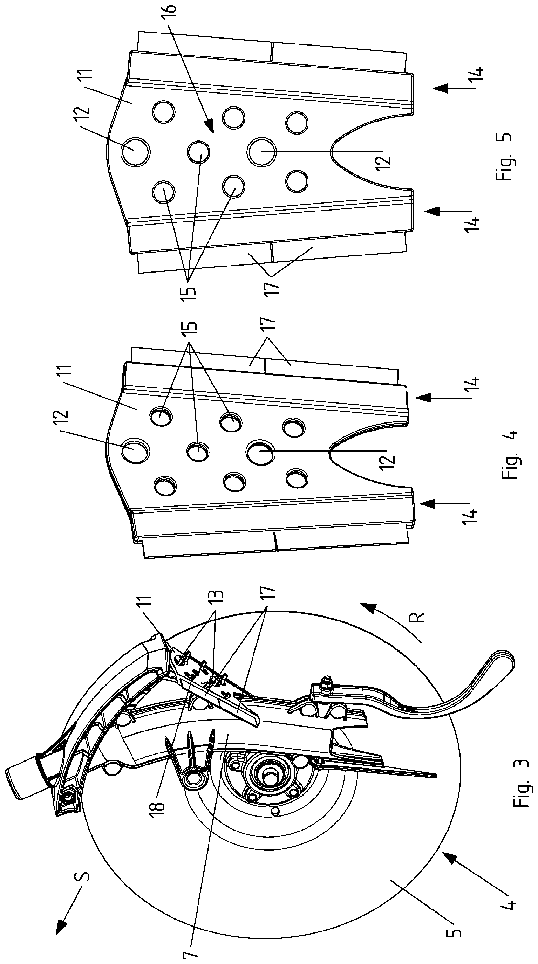

Durch das Einschneiden der Scharscheiben 5 in den Erdboden verschmutzen die Scharscheiben 5. Teile des ausgeschnittenen Erdbodens haften an der Innenseite der Scharscheiben 5. Die Reinigung der Innenseite der Scharscheiben 5 wird durch ein Abstreifelement 11 sichergestellt. Detaillierte Ansichten des Abstreifelements 11 zeigen die Fig. 4 und 5.

Das Abstreifelement 11 weist zwei Befestigungslöcher 12 auf. Mithilfe der Befestigungslöcher 12 wird das Abstreifelement 11 an dem in Särichtung S hinteren Bereich der Saatgutabgabevorrichtung 7 mittels geeigneter Befestigungselemente 13 befestigt, wie Fig. 3 zeigt. Als Befestigungselemente 13 dienen beispielsweise Schraub- und/oder Steckverbindungen.

In Arbeitsposition weist das Abstreifelement 11 offene Enden 14 auf, welche zu den Scharscheiben 5 orientiert sind. In bevorzugter Ausführung ist das Abstreifelement 11 unter Vorspannung befestigt, wodurch es eine U-Form aufweist. Durch die U-Form weisen die offenen Enden 14 des Abstreifelements 11 in Särichtung S nach hinten.

Bewegen sich die Scharscheiben 5 in Särichtung S durch den Boden, bewirkt dies eine Rotation der Scharscheiben 5 in die Rotationsrichtung R. Somit läuft der aus dem Erdboden austretende, verschmutzte Bereich der Scharscheiben 5 gegen die offenen Enden 14 des Abstreifelements 11. Dadurch wird anhaftender Erdboden von den Innenseiten der Scharscheiben 5 abgestreift.

Die Vorspannung des U-förmig gebogenen Abstreifelements 11 sorgt vermittels der Rückstellkraft in die nichtgebogene Form für einen Anpressdruck der offenen Enden 14 des Abstreifelements 11 gegen die Innenseite der Scharscheiben 5.

Zur Verhinderung einer vorspannungsbedingten dauerhaften Verformung des Abstreifelements 11, welche eine Verminderung des Anpressdrucks sowie des Reinigungsergebnisses bewirken würde, ist das Abstreifelement 11 flexibel ausgestaltet. Zur Verbesserung seiner Elastizitätseigenschaften weist das Abstreifelement 11 nicht der Befestigung dienende Löcher 15 auf.

Als Löcher 15 werden im Kontext der Erfindung Bereiche des Abstreifelements 11 verstanden, die eine geringere Materialstärke aufweisen, als ihre Umgebung. Dabei kann die Materialstärke auch wesentlich geringer als die der Umgebung und im Falle eines tatsächlichen Materialdurchbruchs Null sein.

Die Löcher 15 sind in einem Lochmuster 16 angeordnet. Dabei werden Anordnung, Größe, Form und Materialstärke der Löcher derart gewählt, dass die Elastizitätseigenschaften des Abstreifelements 11 geeignet sind, um eine dauerhafte Verformung des Abstreifelements 11 zu verhindern und einen für eine optimale Reinigungswirkung geeigneten Anpressdruck der offenen Enden 14 gegen die Innenseite der Scharscheiben 5 zu gewährleisten.

In analoger Weise kann mittels geeigneter Wahl von Anordnung, Größe, Form und Materialstärke der Löcher die Stärke des Anpressdrucks festgelegt werden. Somit kann ein zum Entfernen fest anhaftender Verschmutzungen notwendiger Anpressdruck erzielt werden, ohne dass der Anpressdruck zu groß wird und er ein Bremsen der Rotationsbewegung der Scharscheiben 5 bewirkt.

Den offenen Enden 14 des Abstreifelements 11 sind im Beispiel der Fig. 3 bis 5 je zwei Verschleißelemente 17 zugeordnet. Die Verschleißelemente 17 sind beispielsweise als Hartmetallplättchen ausgeführt und fest mit den offenen Enden 14 des Abstreifelements 11 verbunden. Die Verschleißelemente 17 bestehen aus besonders abriebfestem Material und erhöhen somit die Lebensdauer des Abstreifelements 11 erheblich, da sie reibend an den Innenseiten der Scharscheiben 5 anliegen. Dadurch wird das elastische Material des Abstreifelements geschont.

Zudem bilden die Verschleißelemente 17 eine Kante, die das Abstreifen von Verschmutzungen von der Innenseite der Scharscheiben begünstigt. Für eine verbesserte Anlage der mit den Verschleißelementen 17 versehenen offenen Enden 14 an die Innenseite der Scharscheiben 5 ist die Verwendung mehrerer kleiner Verschleißelemente 17 gegenüber der Verwendung weniger größerer Verschleißelemente 17 bevorzugt.

Als Sicherung gegen ein Verkanten und/oder Verdrehen des Abstreifelements 11 während des Säbetriebes können zusätzliche Sicherungselemente 18 in die Löcher 15 eingreifen.

Weist eine Sämaschine mehrere Doppelscheibenschare auf, ist jedes mit einem erfindungsgemäßen Abstreifelement 11 ausgestattet.

## Patentansprüche

1. Landwirtschaftliche Sämaschine mit mehreren Säscharen, welche jeweils als Doppelscheibenschare ausgeführt sind, wobei je zwei Scharscheiben V-förmig zueinander angeordnet sind, und mit einem Abstreifelement, welches im in Särichtung hinteren Bereich des Doppelscheibenschars zwischen den jeweils zwei Scharscheiben des Doppelscheibenschars angeordnet ist, wobei das Abstreifelement elastisch ausgeführt und lösbar, U-förmig in das zu seiner Aufnahme vorgesehene Befestigungselement eingespannt ist, wobei die offenen Enden des U-förmig eingespannten Abstreifelements entgegen der Särichtung ausgerichtet sind und sich unter einer Rückstellkraft an die jeweils zwei Scharscheiben des Doppelscheibenschars anlegen, **dadurch gekennzeichnet, dass** das Abstreifelement ein nicht der Befestigung des Abstreifelements an dem Befestigungselement dienendes Lochmuster aufweist, wobei die Form, Größe und Verteilung der Löcher des Lochmusters des Abstreifelements geeignet ist, eine definierte Rückstellkraft des Abstreifelements zu bewirken..

2. Sämaschine nach Anspruch 1, **dadurch gekennzeichnet, dass** die Form, Größe und Verteilung der Löcher des Lochmusters des Abstreifelements geeignet ist, eine gezielte Beeinflussung der Elastizitätseigenschaften des Abstreifelements zu bewirken.

3. Sämaschine nach zumindest einem der vorangegangenen Ansprüche, **dadurch gekennzeichnet, dass** den offenen Enden des Abstreifelements jeweils zumindest ein Verschleißelement zugeordnet ist.

4. Sämaschine nach Anspruch 3, **dadurch gekennzeichnet, dass** das zumindest eine Verschleißelement als Plättchen ausgebildet ist.

5. Sämaschine nach Anspruch 3 oder 4, **dadurch gekennzeichnet, dass** das zumindest eine Verschleißelement aus abriebfestem Material besteht.

## Claims

1. Agricultural seed drill having a plurality of sowing coulters which are each designed as double disc coulters, wherein in each case two coulter discs are arranged in a V-shaped manner with respect to each other, and having a scraping element which is arranged between the in each case two coulter discs of the double disc coulter in the rear region of the double disc coulter in the sowing direction, wherein the scraping element is formed elastically and is clamped releasably, in a U-shaped manner, in the fastening element provided for accommodating it, wherein the open ends of the scraping element clamped in a U-shaped manner are oriented counter to the sowing direction and are placed against the in each case two coulter discs of the double disc coulter under a restoring force, **characterized in that** the scraping element has a pattern of holes not serving for the fastening of the scraping element to the fastening element, wherein the shape, size and distribution of the holes of the pattern of holes of the scraping element is suitable for bringing about a defined restoring force of the scraping element.

2. Seed drill according to Claim 1, **characterized in that** the shape, size and distribution of the holes of the pattern of holes of the scraping element is suitable for bringing about a targeted influencing of the elasticity properties of the scraping element.

3. Seed drill according to at least one of the preceding claims, **characterized in that** in each case at least one wearing element is assigned to the open ends of the scraping element.

4. Seed drill according to Claim 3, **characterized in that** the at least one wearing element is embodied as a small plate.

5. Seed drill according to Claim 3 or 4, **characterized in that** the at least one wearing element is composed of abrasion-resistant material.

## Revendications

1. Semoir agricole comportant plusieurs socs de semoir, lesquels sont à chaque fois réalisés sous forme d'un soc à double disque, dans lequel respectivement deux disques de soc sont disposés de manière à former un V l'un par rapport à l'autre, et comportant un élément racleur disposé entre les deux disques de soc respectifs du soc à double disque dans la région arrière, dans la direction de semis, du soc à double disque, l'élément racleur étant réalisé de manière élastique, et serré de manière amovible et en forme de U dans l'élément de fixation prévu pour le loger, les extrémités ouvertes de l'élément racleur serré en forme de U étant orientées dans la direction opposée à la direction de semis et étant appuyées contre les deux disques de soc respectifs du soc à double disque par une force de rappel, **caractérisé en ce que** l'élément racloir comporte un motif à trous qui ne sert pas à fixer l'élément racleur sur l'élément de fixation, la forme, la taille et la répartition des trous du motif à trous de l'élément racleur étant aptes à appliquer une force de rappel déterminée de l'élément racleur.

2. Semoir agricole selon la revendication 1, **caractérisé en ce que** la forme, la taille et la répartition des trous du motif à trous de l'élément racleur sont aptes à solliciter de manière ciblée les propriétés d'élasticité de l'élément racleur.

3. Semoir agricole selon l'une quelconque des revendications précédentes, **caractérisé en ce qu'**à chaque fois au moins un élément d'usure est associé à l'extrémité ouverte de l'élément racleur.

4. Semoir agricole selon la revendication 3, **caractérisé en ce que** l'au moins un élément d'usure se présente sous la forme d'une plaquette.

5. Semoir agricole selon la revendication 3 ou 4, **caractérisé en ce que** l'au moins un élément d'usure est composé d'un matériau résistant à l'usure par abrasion.
